# EUROPÄISCHE PATENTSCHRIFT

(11) **EP 1 262 679 B1**
(45) Veröffentlichungstag und Bekanntmachung des Hinweises auf die Patenterteilung: **10.10.2007**
(21) Anmeldenummer: 01113338.6
(22) Anmeldetag: 01.06.2001
(51) Int. Cl.: F16D 69/02

(54) **Verfahren zum Verbessern einer Bremsbacke für Scheibenbremsen und eine solche Bremsbacke**
Method for improving a brake pad for disc brakes and brake pad obtained by this method
Procédé d'amélioration de patin de frein et patin de frein ainsi obtenu

(43) Veröffentlichungstag der Anmeldung: 04.12.2002
(73) Patentinhaber: TMD Friction GmbH, 51381 Leverkusen (DE)
(72) Erfinder: Tiebel, Dieter, 51375 Leverkusen (DE); Komor, Henryk, 51375 Leverkusen (DE)
(74) Vertreter: Müller, Eckhard

(56) Entgegenhaltungen:
- DE-A- 3 516 759
- DE-A- 4 321 713
- US-A- 6 005 717

## Beschreibung

Die Neuerung betrifft ein Verfahren zum Verbessern des Fading- und Einlaufverhaltens einer Bremsbacke für Scheibenbremsen, bestehend aus einer Trägerplatte und einem darauf aufgebrachten Reibbelag , wobei sich der Reibbelag aus einer asbestfreien Reibbelagmischung aus organischen und/oder anorganischen Füllstoffen, organischen und/oder anorganischen Elastomeren, Faserstoffen, Schmierstoffen, organischen Bindemitteln und gegebenenfalls Metallen und/oder Metallverbindungen zusammensetzt.

Es ist bekannt ,dass Bremsbeläge ,die organische Bestandteile beinhalten, bei den ersten Bremsungen nach Einbau im Neuzustand einen Einbruch des Reibwertes haben bzw. sich ein Fading-Verhalten einstellt.

Dieses Verhalten rührt aus der Gitterstruktur und dem Entgasungsprozess der sich zersetzenden organischen Bestandteile unter der Hitzeeinwirkung auf den Belag während der ersten Bremsungen. Organische Bestandteile sind zum einen die Bindemittel, Füllstoffe aber auch Gummi, bzw. Elastomere mit denen die elastischen Eigenschaften einer Reibbelagmasse eingestellt werden.

Zur Vermeidung dieser Effekte wird bei der Produktion von Scheibenbremsbelägen die Oberfläche in einem sogenannten Scorch-Prozess verkokt.

Dazu kommen im allgemeinen Flämmeranlagen zum Einsatz, wobei die zur Bremsung bestimmte Reibbelagoberfläche über bis zu 700°C heiße Metallflächen gezogen werden oder auf solche heißen Metallflächen gepresst werden, um eine vollflächige Verkokung der Oberfläche zu erreichen. Die Verkokungstiefe beträgt dabei bis zu 2 mm.

Dieser Wärmebehandlungsprozess ist im Produktionsprozess bei der Herstellung von Bremsbelägen vor dem Lackieren und der Ausrüstung mit Zubehörteilen, wie Federn und Dämpfungsblechen angeordnet.

Nachteilig bei diesen Verfahren ist die geringe Eindringtiefe und der hohe Energieverbrauch.

Zudem müssen die Bremsbeläge, um einen kontinuierlichen Fertigungsprozess zu gewährleisten, vor dem nächsten Arbeitsschritt abgekühlt werden oder es schließt sich ein lang andauernder Kühlungsprozess durch natürliche Konvektion an.
Durch die notwendige starke Erwärmung wird auch die Trägerplatte durch Hitze im Gefüge negativ beeinflusst.

Aus der DE 35 16 759 A ist ein Verfahren zur Wärmebehandlung der Reibfläche eines Reibbelages bekannt, bei dem nach Fertigstellung eines Reibbelages nachträglich die Reibbelagoberfläche mit einem Laser behandelt wird, um auf der Reibbelagoberfläche ein Streifenmuster zu erzeugen. Hierzu werden CO₂-Laser mit mehreren Laserköpfen verwendet.

Nachteilig bei diesem Verfahren ist, dass nicht alle Bereiche der zum Bremsen genutzten Reibfläche verkokt werden, so dass immer noch Entgasungsprozesse während der ersten Bremsvorgänge stattfinden können, die zum Fading führen.

Aus der U.S. 6,005,717 ist ein Kombinationssystem für mehrere Diodenlaser beschrieben, bei dem mehrere Laserlichtstrahlen kombiniert werden können, um einen rechteckigen Laserspot hoher Energie zu erzeugen.

Der Erfindung liegt somit die Aufgabe zugrunde , ein Verfahren zur vollflächigen Behandlung von Reibbelagoberflächen zur Verbesserung des Fading- und Einlaufverhaltens zu schaffen , dass eine berührungslosen direkten Energieeinfluss ermöglicht, die Trägerplatte im Gefüge nicht beeinflusst, im Energieverbrauch sparsam ist, das nachfolgende Handling vereinfacht, eine gleichmäßige aber auch relativ tiefe Eindringtiefe über die gesamte Reibfläche ermöglicht und als Anlage wenig Bauraum benötigt.

Die Aufgabe wird erfindungsgemäß dadurch gelöst, dass als Laser ein Hochleistungsdiodenlaser verwendet wird, dass der Energiestrahl des Hochleistungsdiodenlasers (5) zum Verkoken der Oberfläche derart flächig eingestellt wird, dass die gesamte Breite des Reibbelages erfasst wird, so dass die der Trägerplatte (2) abgewandte Oberfläche (4) von dem Energiestrahl (6) des Hochleistungsdiodenlasers (5) vollflächig verkokt wird.

Mit der Erfindung wird erreicht, dass sämtliche organischen Bestandteile im Reibmaterial bis in die notwendige Tiefe von 2 bis 5 mm verkokt bzw. zersetzt sind und keine Entgasungsprozesse während der ersten Bremsungen stattfinden, ohne dass die Belagträgerplatte durch Wärmeeinwirkung im Gefüge negativ beeinflusst wird. Zudem wird ein wirtschaftliches Verfahren zur Verkokung der gesamten Reibbelagoberfläche zur Verfügung gestellt.

Vorzugsweise sieht die Erfindung weiterhin vor, dass die der Trägerplatte abgewandte Reibmaterialoberfläche durch den Hochleistungsdiodenlaser mit einer Leistungsdichte von 50 bis 150 W/cm² verkokt wird. Die Flammentwicklung während des Prozesses wird dadurch in Grenzen gehalten.

Vorzugsweise ist vorgesehen, daß die Einwirkzeit des Lasers auf das Reibmaterial 3 -15 sec. beträgt, so daß Bremsbacken wirtschaftlich in schneller Folge bearbeitet werden können.

Vorzugsweise ist vorgesehen, daß die zu bearbeitende Reibbelagoberfläche mit einem flächigen Energiestrahl und über die gesamte Breite des Bremsbelages bearbeitet wird, so daß die Temperaturbeinflussung des Reibmateriales gleichmäßig und wirtschaftlich erfolgt und Rissbildung durch Temperaturunterschiede im Material unterbleiben.

Vorzugsweise ist bezüglich des Verfahrens vorgesehen, den Belag, mit der zu bearbeitenden Fläche zum Laserstrahl gerichtet, durch den Energiestrahl eines stationär eingerichteten Hochleistungsdiodenlasers zu führen. Dadurch kann dieser Prozeß in einfacher Weise in verkettete Prozeßschritte der Bremsbelagfertigung unter Einhaltung der kurzen Taktzeiten integriert werden.

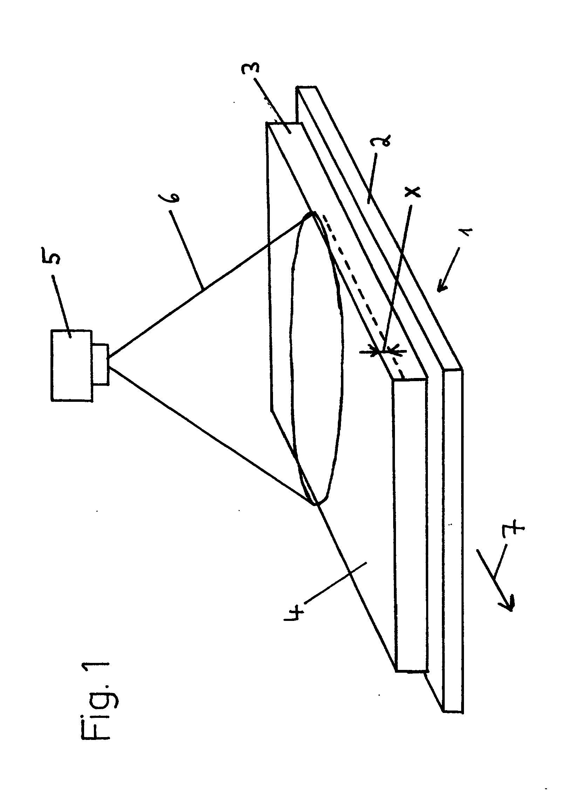

Ein Ausführungsbeispiel der Erfindung wird nachfolgend anhand der Figur 1, die einen Bremsbelag im Verfahrensprozeß darstellt, erläutert.

Die in Fig.1 dargestellte Bremsbacke 1 besteht aus einer Trägerplatte 2 und einem Reibbelag 3, der sich wiederum aus einer asbestfreien Reibbelagmischung aus organischen und/oder anorganischen Füllstoffen, organischen und/oder anorganischen Elastomeren, Faserstoffen, Schmierstoffen, organischen Bindemitteln und gegebenenfalls Metallen und/oder Metallverbindungen zusammensetzt.

Beispielhaft enthält ein solches Reibmaterial 0 bis 70 Gew.-% Metalle, 3 bis 50 Gew.-% Füllstoffe, 10 bis 45 Gew.-% Schmierstoffe und 3 bis 25 Gew.-% an organischen Zusatzstoffen.
Auf die Reibbelagoberfläche 4 wirkt der Energiestrahl 6 aus dem Hochleistungsdiodenlaser 5 wobei die Reibbelagoberfläche 4 bis zu einer Tiefe x derart flächig erhitzt wird, daß das Material zwischen Reibbelagoberfläche 4 und der Tiefe x verkokt wird. Vorzugsweise beträgt die Verkokungstiefe 2 bis 5 mm von der Reibbelagoberfläche 4 gemessen.

Die Bremsbacke 1 wird , z.B. auf einem Metallgitterlaufband unter dem Energiestrahl 6 des Hochleistungsdiodenlasers hindurchgeführt. Der Energiestrahl ist so eingestellt , daß das Reibmaterial 3 im Oberflächenbereich über die gesamte Breite flächig und damit gleichmäßig erhitzt wird. Andere Lasergeräterarten wie CO₂-Laser können nur mit punktförmig Energie in ein Material einleiten.

Die Leistungsdichte liegt vorzugsweise im Bereich um 100 W/cm² . Die notwendige Leistungsdichte ist von der Zusammensetzung des Reibmateriales abhängig.

Die Einwirkzeit beträgt vorzugsweise 5 bis 15 sec. um zum einen geringe Taktfrequenzen bei Linienfertigung zu erreichen und um die Flammbildung während des Verkokungsprozesses zu vermeiden.

Neben dem reinen Entgasen der Reibbelagoberfläche 4 bis zur Tiefe x findet eine Umwandlung der Gitterstruktur in diesem Reibmaterialbereich statt.

Versuche haben gezeigt, daß der so bearbeitete Reibbelag in der Einlaufphase in der Fahrzeugbremse einen relativ konstanten Reibwert im gewünschten Bereich von 0,35 bis 0,4 µ aufweist, d.h. kein nennenswerter Reibwertabfall, das sogenannte Fading , stattfindet.

## Patentansprüche

1. Verfahren zum Verbessern des Fading- und Einlaufverhaltens einer Bremsbacke (1) für Scheibenbremsen, wobei die Bremsbacke (1) aus einer Trägerplatte und einem darauf aufgebrachten Reibbelag (3), hergestellt wird und der Reibbelag (3) aus einer asbestfreien Reibbelagmischung aus organischen und/oder anorganischen Füllstoffen, organischen und/oder anorganischen Elastomeren, Faserstoffen, Schmierstoffen, organischen Bindemitteln und gegebenenfalls Metallen und/oder Metallverbindungen zusammengesetzt wird, wobei die der Trägerplatte (2) abgewandte Oberfläche (4) des Reibbelages mittels eines Lasers behandelt wird,
**dadurch gekennzeichnet,**
**dass** als Laser ein Hochleistungsdiodenlaser verwendet wird,
**dass** der Energiestrahl des Hochleistungsdiodenlasers (5) zum Verkoken der Oberfläche derart flächig eingestellt wird, dass die gesamte Breite des Reibbelages erfasst wird, so dass die der Trägerplatte (2) abgewandte Oberfläche (4) von dem Energiestrahl (6) des Hochleistungsdiodenlasers (5) vollflächig verkokt wird.

2. Verfahren nach Anspruch 1, **dadurch gekennzeichnet, dass** die Oberfläche des Energiestrahls (6) mit einer Leistungsdichte von 50 bis 150 W/cm² verkokt.

3. Verfahren nach Anspruch 1 oder 2, **dadurch gekennzeichnet, dass** die Einwirkzeit des Energiestrahls (6) auf das Reibmaterial 3 bis 15 s beträgt.

4. Verfahren nach einem der Ansprüche 1 bis 3, **dadurch gekennzeichnet, dass** der Reibbelag mit der zu bearbeitenden Fläche zum Energiestrahl (6) gerichtet durch den flächigen Energiestrahl (6) geführt wird.

## Claims

1. Method of improving the fading and breaking-in behaviour of a brake shoe (1) for disc brakes, wherein the brake shoe (1) is produced from a carrier plate and a friction lining (3) mounted thereon and the brake lining (3) is composed of an asbestos-free friction lining mixture of organic and/or inorganic fillers, organic and/or inorganic elastomers, fibrous materials, lubricants, organic binders and optionally metals and/or metal compounds, wherein the surface (4) which is remote from the carrier plate (2), of the friction lining is treated by means of a laser, **characterised in that** a high-performance diode laser is used as laser, that the energy beam of the high-performance diode laser (5) for decarbonisation of the surface is set over an area in such a manner that the entire width of the friction lining is scanned so that the surface (4) remote from the carrier plate (2) is carbonised over the whole area by the energy beam (6) of the high-performance diode laser (5).

2. Method according claim 1, **characterised in that** the surface of the energy beam (6) is carbonised at a power density of 50 to 150 W/cm².

3. Method according claim 1 or 2, **characterised in that** the action time of the energy beam (6) on the friction material is 3 to 15 seconds.

4. Method according to one of claims 1 to 3, **characterised in that** the friction lining is guided through the areal energy beam (6) with the surface, which is to be treated, directed towards the energy beam (6).

## Revendications

1. Procédé d'amélioration du comportement d'évanouissement et de rodage d'un patin de frein (1) pour freins à disque, le patin de frein (1) étant fabriqué à partir d'une plaque de support et d'une garniture de friction (3) appliquée dessus et la garniture de friction (3) étant composée d'un mélange de garniture de friction exempt d'amiante constitué de charges organiques et/ou anorganiques, d'élastomères organiques et/ou anorganiques, de matières fibreuses, de lubrifiants, de liants organiques et éventuellement de métaux et/ou de liaisons métalliques, la surface (4) de la garniture de friction opposée à la plaque de support (2) étant traitée au moyen d'un laser,
**caractérisé en ce**
**qu'**un laser à diode haute puissance est utilisé comme laser,
en ce que le faisceau énergétique du laser à diode haute puissance (5) destiné à carboniser la surface est réglé de telle sorte que toute la largeur de la garniture de friction soit couverte, de sorte que la surface (4) opposée à la plaque de support (2) est entièrement carbonisée par le faisceau énergétique (6) du laser à diode haute puissance (5).

2. Procédé selon la revendication 1, **caractérisé en ce que** la surface du faisceau énergétique (6) est carbonisée avec une densité de puissance allant de 50 à 150 W/cm².

3. Procédé selon la revendication 1 ou 2, **caractérisé en ce que** la durée d'action du faisceau énergétique (6) sur le matériau de friction s'élève de 3 à 15 s.

4. Procédé selon l'une quelconque des revendications 1 à 3, **caractérisé en ce que** la garniture de friction comprenant la surface à traiter est guidée par le faisceau énergétique plat (6) en étant orientée vers le faisceau énergétique (6).
